Europäisches Patentamt

European Patent Office

Office européen des brevets

(11) Publication number: **0 288 667 B1**

# EUROPEAN PATENT SPECIFICATION

(45) Date of publication of patent specification: **08.05.91**  (51) Int. Cl.⁵: **F16M 11/10**, G06F 1/00

(21) Application number: **88101466.6**

(22) Date of filing: **02.02.88**

(54) Tilt mechanism for display terminal.

(30) Priority: **30.03.87 US 32118**

(43) Date of publication of application:
**02.11.88 Bulletin 88/44**

(45) Publication of the grant of the patent:
**08.05.91 Bulletin 91/19**

(84) Designated Contracting States:
**DE FR GB**

(56) References cited:
EP-A- 0 076 171    EP-A- 0 160 237
US-A- 3 538 250    US-A- 3 784 135
US-A- 4 471 931    US-A- 4 524 940
US-A- 4 546 948    US-A- 4 556 189
US-A- 4 624 433

IBM TECHNICAL DISCLOSURE BULLETIN, vol.
27, no. 8, January 1985, pages 4886-4887,
New York, US; A.R. COX et al.: "Tilt and
rotate device for CRT display"

(73) Proprietor: **International Business Machines Corporation**
**Old Orchard Road**
**Armonk, N.Y. 10504(US)**

(72) Inventor: **Beaton, Larry Gordon**
**902 Flanders Drive**
**Garner, NC 27529(US)**

(74) Representative: **Bonneau, Gérard**
**Compagnie IBM France Département de Propriété Intellectuelle**
**F-06610 La Gaude(FR)**

## Description

The present invention relates to display terminals and more particularly to an inexpensive tilt mechanism for a display terminal.

Display terminal users often want to be able to adjust the tilt of their terminal for a variety of reasons. If glare from overhead lights is a problem, a user may tilt the terminal forward until the screen faces away from the lights or toward the floor. This is referred to as a negative tilt orientation. Alternatively, a user whose terminal is resting on a relatively low surface may wish to tilt the terminal backward until the screen faces toward the ceiling. This is referred to as a positive tilt orientation.

The mechanisms for allowing users to make this type of adjustment range from something as simple as a book placed beneath the terminal to something as elaborate as an electromechanical or even a hydraulic mechanism which allows an operator to tilt or swivel the terminal or to change its vertical elevation. Placing a book beneath the terminal may have the virtue of being cheap, but often isn't practical. For example, a user can't look at a book when his terminal is resting on it. Of greater consequence is the fact that a book, or any other makeshift support, may block the flow of needed cooling air through the terminal or may be accidentally dislodged. If the latter happens, the terminal obviously may be damaged when it crashes onto the primary supporting surface.

Less impromptu forms of terminal support may not possess the disadvantages of a book, but can add significantly to the cost of a terminal due to their complexity. A number of mechanisms have been divulged which provide not only tilt, but also swivel capability. Examples of these mechanisms may be found in U. S. patents 4,304,385, 4,365,779, 4,410,159, 4,415,136, 4,453,687, 4,494,720, 4,500,060, 4,542,872 and 4,554,590.

While the tilt and swivel mechanisms disclosed in the above-listed patents or elsewhere in the prior art vary considerably in their mechanical details, all are relatively complex due to the requirement for mechanical components capable of providing the swivel function.

Where a user does not have to be able to swivel a display terminal, potentially less expensive tilt-only mechanisms may be used. A number of different tilt mechanisms are disclosed in issued patents. Examples of such mechanisms can be found in U.S. patents 3,538,250, 3,740,011, 4,349,173, 4,368,867, 4,427,243, 4,471,931, 4,474,352, 4,524,940, 4,527,766, 4,533,105 and 4,561,620.

While these known prior art mechanisms perform a basic tilt function in many different ways, most include a number of moving parts. This adds to the initial cost of manufacture and assembly while increasing the possibility of failure during normal terminal use.

A simple tilt mechanism for a tablet on which a display terminal could be placed is described in US patent 4,546,948. Such a mechanism comprises a retaining means placed under the tablet, a support movable within the path defined by the retaining means, and a pedestal extending away from the tablet and attached to the support.

Another interesting tilt mechanism is described in US patent 4,556,189 which relates to a display terminal comprising a movable support displaceable along L-shaped guide rails and comprising locking means which can be disengaged to permit tilting of the terminal until it has reached the desired position.

The present invention is an inexpensive tilt mechanism for a display terminal. The tilt mechanism has a single movable part which reduces the initial cost and the possibility of failure during terminal use.

In a preferred embodiment, the mechanism makes use of a retaining means which extends from front to back at the bottom surface of the display terminal. The retaining means has at least one engageable surface. A movable terminal support includes a base plate which is received within the retaining means. The base plate can be moved along the path defined by the retaining means. A terminal supporting pedestal extends away from the base plate or toward any surface on which the terminal rests. The movable support includes a locking means which is adjacent to but disengageable from engageable surface of the retaining means. The locking means, when disengaged, permits selective movement of the movable support along the defined path. When engaged, the locking means holds the movable support in place.

While the specification concludes with claims particularly pointing out and distinctly claiming that which is regarded as the present invention, details of preferred embodiments of the invention may be more readily ascertained from the following technical description when read in conjunction with the accompanying drawing wherein :

Figure 1 is a perspective view of a display terminal looking towards the bottom surface of the terminal;

Figures 2, 3 and 4 illustrate different terminal orientations determined by different positions of a tilt mechanism;

Figure 5 is a detailed perspective view of one embodiment of the movable support means;

Figure 6 is a perspective view showing the movable support means in place within a retaining means formed on the bottom wall of the display terminal;

Figure 7 is a plan view of the assembly shown in Figure 6 with the movable support means being in an engaged or locked position;

Figure 8 is a plan view showing the movable support means in a disengaged position in which it can be moved along a path defined by the retaining means; and

Figure 9 is a perspective view of an alternate embodiment of the invention.

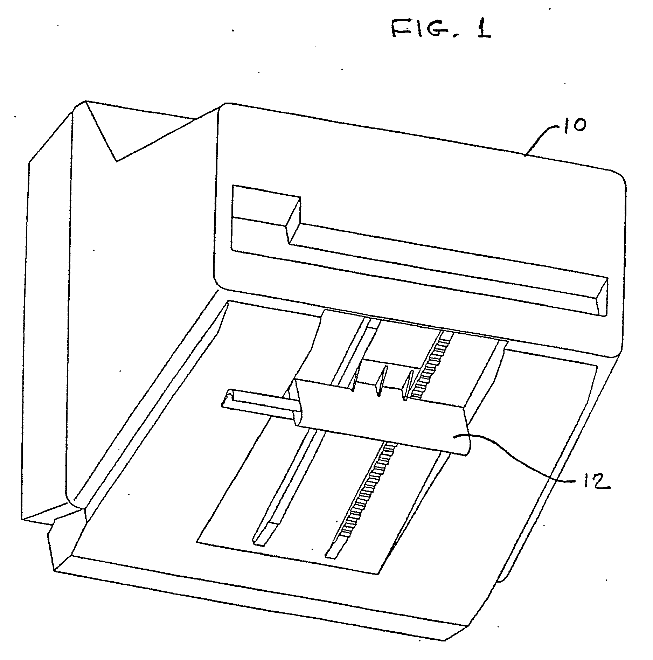

Figure 1 is a perspective view showing the left side, rear and bottom surface of a display terminal 10. The orientation or tilt of a display terminal 10 can be adjusted by means of an inexpensive tilt mechanism including a movable support 12 which can be shifted along a retaining means 14 extending from the front to the back of the terminal 10 at its bottom surface. The position of the movable support 12 within the retaining means determines the orientation or tilt of the terminal 10.

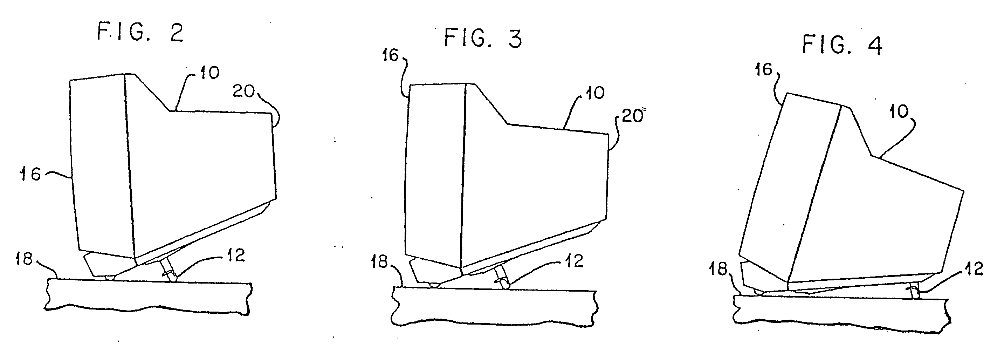

Referring to Figure 2, when support 12 is at or near the face 16 of terminal 10, the face is tilted toward a terminal supporting surface 18. If the movable support 12 is shifted towards a rear surface 20 of terminal 10, the face 16 can assume a zero tilt or vertical orientation as shown in Figure 3. If the movable support 12 is moved closer to the rear surface 20, the terminal will assume a positive tilt orientation, as shown in Figure 4.

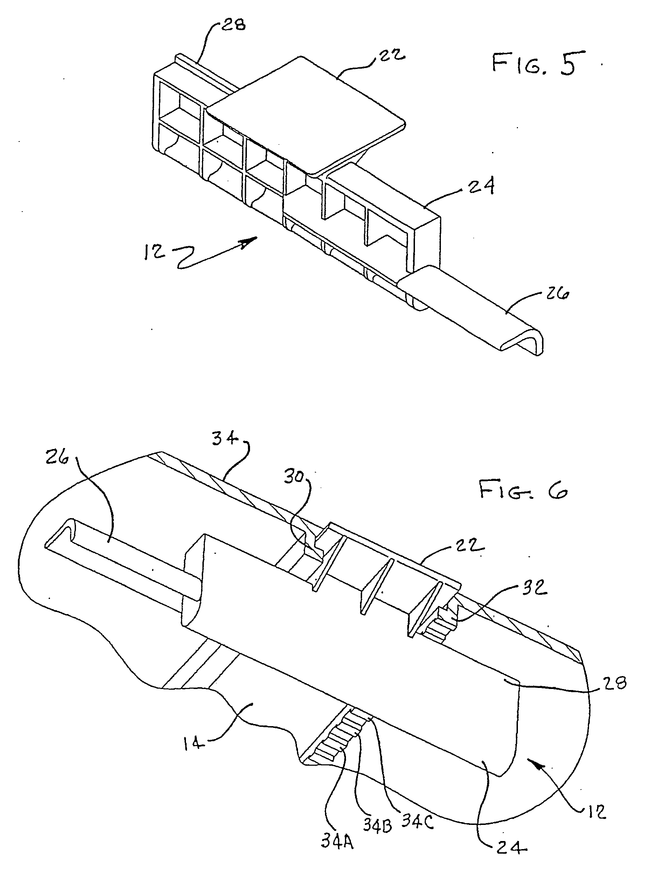

Figure 5 is a more detailed perspective view of the movable support 12. The movable support 12 includes a base plate 22 and a terminal supporting pedestal 24, preferably formed with a crate-like construction for strength purposes. The terminal supporting pedestal 24 includes an actuating lever 26 and a small upwardly extending ridge 28. The functions of the lever 26 and ridge 28 are described with reference to later figures.

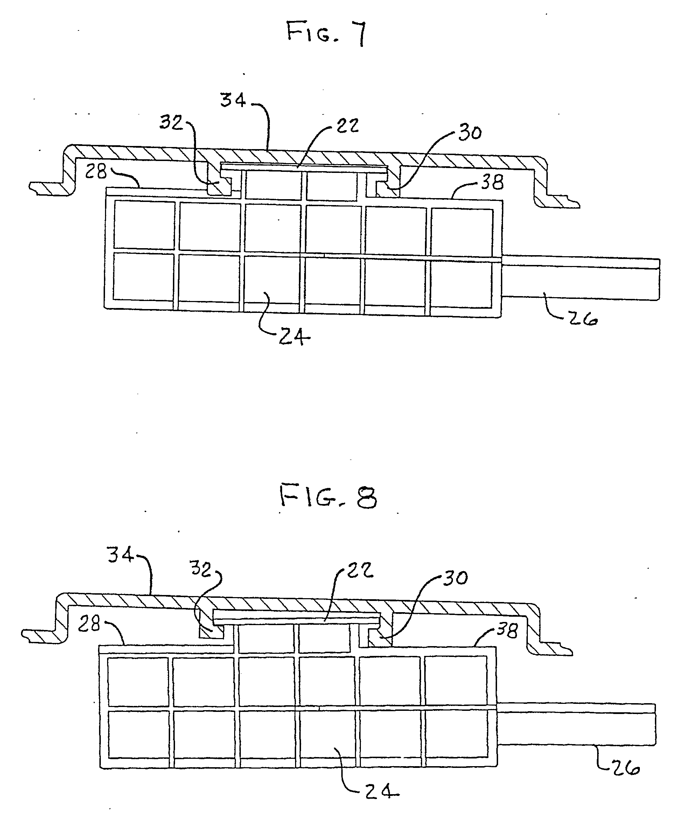

Figure 6 is a partial perspective view of the movable support 12 in position in the retaining means 14. A preferred embodiment of retaining means 14 comprises two parallel rails 30 and 32, preferably formed integrally with the bottom surface 34 of the display terminal 10. Each of the rails 30 and 32 has a generally L-shaped cross section to define a channel extending from the front to the back of the display terminal. The base plate 22 rides within the defined channel. The thickness of base plate 22 is less than the vertical dimension of the channel so the movable support 24 can move a limited vertical distance within the channel. In a preferred embodiment, rail 32 includes a bottom surface which may be engaged by movable support 24 to lock the support in position. In the illustrated embodiment, the engageable surface comprises a series of teeth 34A, 34B, 34C, etc. The ridged surface 28 on the movable support 12 can be received in a space between two adjacent teeth. Figure 7 shows the movable support 12 in an engaged position. In this position, the upper surface of the base plate 22 and the lower surface of the pedestal 24 are generally parallel to the bottom surface 34 of the terminal while ridge 28 on pedestal 24 is trapped between two of the teeth on rail 32. Surface 38 on the pedestal 24 rests against the smooth bottom surface of the rail 30.

To disengage the movable support so that it can be shifted for or aft in the channel defined by the L-shaped rail 30 and 32, a terminal user lifts lever 26 vertically as shown in Figure 8. As lever 26 moves upwardly, the pedestal 24 pivots about the point of contact between the bottom surface of rail 30 and the surface 38 of pedestal 24. The pivotal movement allows ridge 28 to clear the teeth on the bottom surface of rail 32. As long as lever 26 is held at its uppermost vertical position, the movable support can be shifted along the channel defined by rail 30 and 32 to any desired position. When the desired position is reached, lever 26 is released. The weight of the terminal will cause the movable support to return to the engaged position shown in Figure 7.

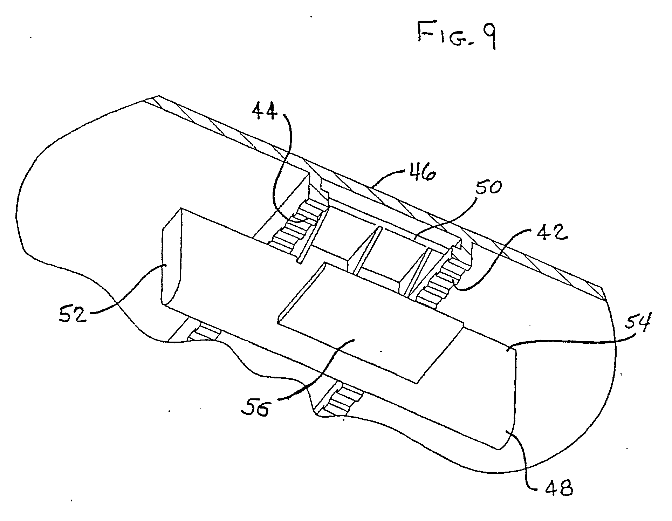

Figure 9 is a partial perspective view of an alternate embodiment of the invention. In this embodiment, a retaining means consists of two L-shaped rails 42 and 44, each of which has teeth formed along its bottom surface. As was the case with the embodiment described earlier, the retaining means is preferably an integral part of a bottom wall 46 of a terminal housing. A movable support 48 includes a tab 56 extending from one side of movable support 48 and a base plate 50 which can be shifted along the channel defined by the rails 42 and 44. The thickness of the base plate 50 is less than the vertical dimension of the channel so that movable support 48 has a limited range of the vertical movement. The movable support 48 lacks any actuating lever but includes shoulders 52 and 54 which can be received in the slots between the individual teeth on the bottom surface of the rails 42 and 44.

To adjust the tilt of the terminal equipped with this embodiment of the tilt mechanism, the operator lifts the terminal clear of its primary supporting surface. When the weight of the terminal is removed from the movable support, the vertical play of the base plate 50 within the channel allows shoulders 52 and 54 to drop clear of the toothed surfaces. The movable support 48 will slide forward in the channel with minimal urging by the operator. If the movable support is to be moved to the rear, the operator may have to depress tab 56 when pushing the movable support 48. Pressure on tab 56 will prevent the base plate 50 from rotating within the channel in such a way that shoulders 52 and 54 of movable support 48 come into unintended contact with the teeth on rails 42 and 44.

When the desired position is reached, the terminal is lowered towards its primary supporting surface. The movable support 48 is locked into position when the shoulders 52 and 54 enter gaps between adjacent teeth on both rails.

**Claims**

1. A tilt mechanism for a display terminal (10) comprising retaining means (14) extending from front to back at the bottom surface of the display terminal, said retaining means having at least one engageable surface (32), and a movable support (12) including a base plate (22) received within said retaining means, said base plate being movable along a path defined by said retaining means, and a terminal supporting pedestal (24) extending away from the base plate; said tilt mechanism being characterized in that :

the engageable surface of said retaining means comprises at least one toothed surface formed integrally at the bottom of one of two L-shaped parallel members which define a channel and which are integral with the display terminal and said movable support comprises locking means (28) adjacent to but disengageable from said engageable surface to permit selective movement of said movable support along the channel defined by said L-shaped parallel members while said locking means is disengaged from said toothed surface.

2. The tilt mechanism as defined in Claim 1 wherein the locking surface (28) on said terminal supporting pedestal (24) comprises at least one upwardly extending shoulder which may be received between two adjacent teeth (34A, 34B) on said toothed surface (32).

3. The tilt mechanism as defined in claim 1 or 2 wherein said engageable surface (32) comprises two toothed surfaces (42, 44), and further including a tab (56) extending from said terminal supporting pedestal (24), said tab being depressed by an operator when the pedestal is being moved to the rear to prevent the base plate (22, 50) from rotating within said channel in such a way that shoulders (52, 54) of said movable support (12) come into unintended contact with the teeth-on said toothed surfaces.

4. The tilt mechanism as defined in any one of claims 1 to 3 further including an actuating handle (26) extending from said terminal supporting pedestal (22), said actuating handle being used to disengage the locking surface (28) on said terminal supporting pedestal from said at least one toothed surface (32 or 42, 44) when the handle is moved vertically, thereby pivoting the movable support (12) about a pivot point at the intersection of said movable support and the parallel member lacking said at least one toothed surface.

**Revendications**

1. Mécanisme de basculement pour terminal de visualisation (10) comprenant un moyen de retenue (14) disposé d'avant en arrière à la surface inférieure du terminal de visualisation, ledit moyen de retenue comportant au moins un élément d'engrènement (32) et un support mobile (12) comprenant un plateau de support (22) disposé dans ledit moyen de retenue, ledit plateau de support étant mobile sur un chemin défini par ledit moyen de retenue et un support de terminal (24) solidaire du plateau de support ; ledit mécanisme de basculement étant caractérisé en ce que :

ledit élément d'engrènement dudit moyen de retenue comporte au moins une crémaillère solidaire de la partie inférieure de l'un de deux éléments parallèles en forme de L qui définissent un canal et qui sont solidaires du terminal de visualisation et en ce que ledit support mobile comprend un moyen de verrouillage (28) adjacent audit élément d'engrènement mais pouvant être dégagé de celui-ci pour permettre un mouvement sélectif dudit support mobile le long du canal défini par lesdits éléments parallèles en forme de L tandis que lesdits éléments parallèles en forme de L tandis que ledit moyen de verrouillage est dégagé dudit élément d'engrènement.

2. Mécanisme de basculement selon la revendication 1, dans lequel le moyen de verrouillage (28) sur ledit support de terminal (24) comprend au moins un épaulement orienté vers le haut qui peut se loger entre deux crans adjacents (34a, 34b) dudit élément d'engrènement (32).

3. Mécanisme de basculement selon la revendication 1 ou 2, dans lequel ledit élément d'engrènement (32) comprend deux crémaillère (42, 44) et comprend en outre un volet mobile (56) fixé audit support de terminai (24), ledit volet mobile étant enfoncé par un opérateur lorsque le support est déplacé vers l'arrière pour empêcher le plateau de support (22,50) de tourner à l'intérieur dudit canal d'une manière telle que le bord (54) dudit support mobile (12) vienne en contact accidentel avec les crans desdites crémaillères.

4.  Mécanisme de basculement selon l'une quelconque des revendications 1 à 3, comprenant en outre une poignée d'actionnement (26) fixé audit support de terminal (22), ladite poignée d,actionnement étant utilisée pour dégager le moyen de verrouillage (28) dudit support de terminal de ladite au moins une crémaillère (32 ou 42, 44) lorsque la poignée est déplacée dans le sens vertical, permettant ainsi le pivotement du support mobile (12) autour d'un point pivot à l'intersection dudit support mobile et de l'élément parallèle manquant dégagé de ladite au moins une crémaillère.

## Ansprüche

1.  Neigevorrichtung für eine Bildschirmstation (10) mit Haltemitteln (14), die sich von vorne nach hinten auf der unteren Oberfläche der Bildschirmstation erstrecken, wobei die Haltemittel zumindest eine einen Eingriff ermöglichende Oberfläche (32) und einen bewegbaren Träger (12) einschließlich einer innerhalb der Haltemittel aufgenommenen Grundplatte (22) aufweisen, die Grundplatte entlang einer durch die Haltemittel definierten Bahn bewegbar ist und ein stationstragender Fuß (24) sich von der Grundplatte vorstreckt, wobei die Neigevorrichtung dadurch gekennzeichnet ist, daß

    die einen Eingriff ermöglichende Oberfläche der Haltemittel zumindest eine gezahnte Oberfläche aufweist, die einstückig auf dem Boden eines von zwei L-förmigen parallelen Teilen ausgebildet ist, die einen Kanal definieren und die einstückig mit der Bildschirmstation sind und der bewegbare Träger ein Sperrmittel (28) aufweist, das an der einen Eingriff ermöglichenden Oberfläche angrenzend liegt, jedoch von ihr nicht außer Eingriff gebracht werden kann, um ein selektives Bewegen des bewegbaren Trägers entlang des Kanals zu ermöglichen, der durch die L-förmigen, parallelen Teile definiert ist, während das Sperrmittel von der gezahnten Oberfläche außer Eingriff gebracht ist.

2.  Neigevorrichtung nach Anspruch 1, bei welcher die Sperroberfläche (28) auf dem stationtragenden Fuß (24) zumindest eine sich nach oben erstreckende Schulter aufweist, die zwischen zwei angrenzenden Zähnen (34A, 34B) auf der gezahnten Oberfläche (32) aufgenommen werden kann.

3.  Neigevorrichtung nach Anspruch 1 oder 2, bei welcher die einen Eingriff ermöglichende Oberfläche (32) zwei gezahnte Oberflächen (42, 44) aufweist und ferner eine Nase (56) besitzt, die sich aus dem stationtragenden Fuß (24) vorstreckt, wobei die Nase von einem Bediener heruntergedrückt wird, wenn der Fuß zu der Hinterseite bewegt wird, um zu verhindern, daß die Grundplatte (22, 50) innerhalb des Kanals so gedreht wird, daß Schultern (52, 54) des bewegbaren Trägers (12) in eine unvorgesehene Berührung mit den Zähnen auf den gezahnten Oberflächen kommen.

4.  Neigevorrichtung nach irgend einem der Ansprüche 1 bis 3, die ferner einen Betätigungsgriff (26) aufweist, der sich aus dem stationtragenden Fuß (22) vorstreckt, wobei der Betätigungsgriff verwendet wird, um die Sperroberfläche (28) auf dem stationtragenden Fuß von der zumindest einen gezahnten Oberfläche (32 oder 42, 44) außer Eingriff zu bringen, wenn der Griff vertikal bewegt wird, wodurch der bewegbare Träger (12) um eine Schwenkstelle bei der Schnittstelle des bewegbaren Trägers und des parallelen Teiles geschwenkt wird, welcher die zumindest eine gezahnte Oberfläche nicht aufweist.

FIG. 1

FIG. 2

10

20

16

18

12

FIG. 3

16

10

20

18

12

FIG. 4

16

10

18

12

EP 0 288 667 B1

FIG. 5

FIG. 6

FIG. 7

FIG. 8

FIG. 9